# EUROPEAN PATENT SPECIFICATION

(11) **EP 2 881 249 B1**
(45) Date of publication and mention of the grant of the patent: **06.07.2016**
(21) Application number: 14195420.6
(22) Date of filing: 28.11.2014
(51) Int. Cl.: B32B 5/18, B32B 5/24, B32B 5/30, C08J 5/04, C08J 5/24, D06M 13/395, D04H 1/4266, D04H 1/4382, D04H 1/587, B29K 79/00, B29K 1/00, B29L 9/00, D04H 1/425, D04H 1/485, D04H 1/488, B32B 5/02

(54) **Natural fiber polymer composite and eco-friendly lightweight base material for automotive interior**
Naturfaserpolymerverbundstoff und umweltfreundliches, leichtgewichtiges Basismaterial für Kraftfahrzeuginnenraum
Composite de polymère de fibres naturelles et matériau de base léger et écologique pour habitacles d'automobiles

(30) Priority: 05.12.2013 KR 20130150824; 11.08.2014 KR 20140103366
(43) Date of publication of application: 10.06.2015
(73) Proprietor: Hanil E-Hwa Co., Ltd., Seoul 135-750 (KR)
(72) Inventor: Kim, Ki-Sung, 336-883 Chungcheongnam-do (KR); Ji, Sang-Gyu, 336-883 Chungcheongnam-do (KR)
(74) Representative: Grünecker Patent- und Rechtsanwälte PartG mbB

(56) References cited:
- EP-A1- 2 025 558
- EP-A1- 2 027 995
- EP-A1- 2 631 066
- WO-A1-2008/107664
- DE-A1- 10 106 694
- DE-A1- 10 242 770
- US-A- 2 270 223
- US-A- 3 007 763
- US-A1- 2007 122 616

## Description

### TECHNICAL FIELD

The present invention relates to a natural fiber polymer composite and an eco-friendly lightweight substrate material for the automotive interior.

### BACKGROUND

A substrate material for the automotive interior is required to maintain dimensional stability and physical properties at various temperatures and humidities, since the material is an automotive part in direct contact with passengers, and performs a role of protecting passengers from external environments, maintaining a form for which a plurality of components is configured. In addition, due to recent issues, such as environmental pollution and global warming, there is a further need of eco-friendly material use and weight lightening for enhancing fuel efficiency.

Generally, a substrate material for the automotive interior has a sandwich-type structure, in which reinforcing layers are stacked on one or both sides of a core layer, where, previously, a thermosetting phenol resin impregnated in a glass fiber felt as a reinforcing layer and a polyurethane foam sheet as a core layer, are mainly used.

However, a glass fiber felt for use in a reinforcing layer has drawbacks, in that dust particles generated from preparation are harmful to the human body, nearly non-solubility in natural environments causes resulting wastes to pollute the environments, and a phenol resin used as a binder is also nearly insoluble and difficult to recycle, thus is not eco-friendly. Furthermore, these materials have levels of high density, which may lead to a decrease in fuel efficiency caused by an increase in weight when applied to automotive parts. In addition, since a polyurethane foam sheet for use in a core layer is not heat-melting, there is a need of additional processes, such as applying an adhesive when stacking a reinforcing layer or applying a hot-melt film, resulting in disadvantages such as complicated and cost-consuming processes.

Recently, in order to resolve the above-mentioned problems, use of natural fiber as a reinforcing layer and a foam sheet as a core layer has been introduced, which contributed to excellence in weight lightening and eco-friendliness of a substrate material when used at room temperature, however, still has drawbacks in relation to form stability, such as, distortion or deflection of a substrate material in high temperature and humidity conditions, due to drawbacks of natural fiber having poor water-resistance.

Accordingly, several studies concerning pre-treatment methods for enhancing water-resistance of natural fiber, such as electronic beam radiation, plasma radiation, alkali treatment, and silane treatment, have been carried out to resolve these drawbacks, however, still have limitations in application to industrial processes, due to high levels of process set-up expense consumption for pre-treatment and requirement of additional processing time.

EP 2 631 066 A1 discloses a method for manufacturing a multi-layer structure for a vehicle interior material. The multi-layer structure comprises a foam sheet and reinforcement sheets stacked on both sides of the foam sheet. The reinforcement sheets may be manufactured by mixing natural and synthetic fibers and then subjecting the mixture to a heat roller process.

From US 3 007 763 A, it is known to treat fiber textile materials with di-isocyanate dissolved in a specific solvent in order to improve a "wet strength" of the fiber material. The dissolved di-isocyanate, which may be toluene di-isocyanate, is contacted with the textile material for a sufficient time and then excess solution is removed from the textile material.

### SUMMARY

It is an object of the present invention to provide a method for preparing a natural fiber polymer composite or a substrate material for an automotive interior, which has improved lightweightness and enhanced humidity resistance, strength and physical properties, and may use eco-friendly material.

This object is achieved by the subject matter of claims 1 and 4. The dependent claims describe advantageous embodiments of the invention.

The present invention provides a method for preparing a substrate material for the automotive interior, which has excellence in lightweightness and enhancement in humidity-resistance and strength of a natural fiber reinforcing layer using isocyanate, and thus in deflection of a substrate material and degradation of physical properties, in order to resolve drawbacks of known substrate materials for the automotive interior having a sandwich-type structure including natural fiber, such as deflection of a substrate material and degradation of physical properties in high temperature and humidity conditions.

The present invention provides a method for preparing a substrate material for the automotive interior, which has excellence in humidity-resistance and lightweightness using an eco-friendly material, comprising applying isocyanate on a felt consisting essentially of natural fiber and synthetic fiber, to prepare a thin film reinforcing layer having enhanced humidity-resistance, and continuously thermal-laminating it on a thermoplastic foam sheet.

The present invention provides a method for preparing a substrate material for the automotive interior, having enhanced humidity-resistance, characterized in four steps including, a first step of preparing a felt using natural fiber and synthetic fiber; a second step of applying liquid isocyanate on the felt and then carrying out semi-curing reaction using a hot-working pressing roller to prepare a sheet; a third step of applying thermoplastic polymer powder on the sheet and then completing the formation of a thermoplastic polymer powder layer and curing reaction by passing through a hot-working oven to prepare a thin film reinforcing layer using the pressing roller; and a forth step of continuously stacking the prepared thin film reinforcing layer on one or both sides of a core layer consisting essentially of a thermoplastic foam sheet in a thermal-laminating process to prepare a substrate material.

In addition, the present invention provides a method for preparing a substrate material for the automotive interior, having enhanced humidity-resistance, characterized in four steps including, a first step of mixing natural fiber and synthetic fiber by carding to prepare a felt via web-forming and needle-punching processes; a second step of applying or impregnating isocyanate on the felt to mold in a semi-cured state using a hot-working pressing roller at the temperature of 150°C to 250°C, to prepare a sheet by pressing; a third step of applying thermoplastic powder of 10 g/m² and 100 g/m² on the sheet and passing it through a hot-working oven at the temperature of 150°C to 250°C, and then pressing it on a hot-working roll to prepare a thin film reinforcing layer; and a forth step of continuously stacking the prepared thin film reinforcing layer on a thermoplastic foam sheet in a thermal-laminating process to prepare a substrate material.

In an embodiment according to the present invention, it is preferred that the thermoplastic foam sheet consists essentially of polypropylene, polyethylene, or polyester; the foaming magnification of the sheet is 5 to 40 times; and the thickness of the sheet is 2 to 10 mm.

In an embodiment according to the present invention, it is preferred that the isocyanate is methylene diphenyl di-isocyanate (MDI) or toluene di-isocyanate (TDI).

In an embodiment according to the present invention, it is preferred that the weight of the isocyanate impregnated in the natural fiber thin film reinforcing layer is 5 g/m² to 100 g/m².

In an embodiment according to the present invention, it is preferred that isocyanate or epoxy incorporated in the thin film reinforcing layer is added in a manner of a spraying process or impregnating in a roll.

In an embodiment according to the present invention, it is preferred that the thickness of thin film reinforcing layer is 0.5 to 2 mm; and the weight of the layer is 120 g/m² to 700 g/m².

In an embodiment according to the present invention, it is preferred that one or more synthetic fibers for use in the thin film reinforcing layer are selected from polypropylene fiber of 30-100 mm in length, core-sheath low melting point polyester fiber, polyester fiber, polyethylene fiber, acryl fiber, or biodegradable fiber.

In addition, it is preferred that the content of synthetic fiber for use in the thin film reinforcing layer is 30-70 % by weight.

In addition, it is preferred that one or more natural fibers for use in the thin film reinforcing layer are selected from kenaf of 30-100 mm in length, jute, linum, bamboo, or sisal.

In addition, it is preferred that the content of natural fiber for use in the thin film reinforcing layer is 30-70 % by weight.

In addition, it is preferred that one or more for use in the thermoplastic powders are selected from low-density polyethylene, high-density polyethylene, or polypropylene.

In addition, according to the present invention, it is preferred that the weight of an eco-friendly lightweight substrate material having excellent humidity-resistance is 300 g/m² to 1500 g/m².

The present invention also provides an eco-friendly lightweight substrate material for the automotive interior having enhanced humidity-resistance, prepared by the above-described preparing methods, characterized in that a film reinforcing layer is thermal-laminated on one or both sides of a core material consisting essentially of a thermoplastic foam sheet; liquid isocyanate is applied or impregnated on a felt; the film reinforcing layer is then semi-cured using a hot-working pressing roller on the surface of felt layers of natural fiber and synthetic fiber; and after applying thermoplastic powder, a thermoplastic powder layer is formed and curing reaction of isocyanate or epoxy is completed by passing through a hot-working oven.

In addition, the present invention further provides an eco-friendly lightweight substrate material for the automotive interior having enhanced humidity-resistance, characterized in that a humidity-resistance flexural rigidity is greater than 1.0 kgf/5cm, and a humidity-resistance deflection extent (L) is equal to, or less than 2.0 by the following standards,
(where the humidity-resistance flexural rigidity (kgf/5cm) is the measured value, regarding a specimen of "50 mm x 150 mm x thickness" and "660 g/m²" in weight, calculated based on ASTM D790 after allowing the specimen for 24 hours at the testing rate of 5 mm/min, the span width of 100 mm, 50°C, and 95RH% humidity, and then stabilizing it for an hour at 23°C and 95RH% humidity.
and where the humidity-resistance deflection extent (L) is measured by fixating 70mm in the distal end of a specimen of "50 mm x 150 mm x thickness" and "660 g/m²" in weight; placing a weight of 40 mm x 60 mm in size and 34.2 g in weight on the opposite part; and measuring the difference between an initial height (L1) from the bottom to the lower part of the specimen and a subsequent height (L2) measured after allowing the specimen for 7 hours at 50°C and 95RH% humidity (i.e. L = L1 - L2))

As described in the above, an eco-friendly lightweight substrate material for the automotive interior according to the present invention has advantages achieved by substituting glass fiber for use in conventional automotive industry with natural fiber, to provide an eco-friendly material that is not harmful to the human body, and applying a thermal-laminating process without using an adhesive or hot-melt film used in bonding a foam sheet and a reinforcing layer to provide a simple, less cost-consuming process and unharmful working environments. Furthermore, applying isocyanate to a natural fiber reinforcing layer in a simple and less cost-consuming process, has effects in remarkably enhancing deflection, distortion, and degradation of physical properties in high temperature and humidity conditions that the known natural-fiber containing substrate materials for the automotive interior having a sandwich-type structure used to have, thus providing for application to various industries such as train interior, aircraft interior, and architectural interior as well as automotive interior.

In addition, a method according to the present invention has effects in providing for less cost-consuming preparation, since only a simple process is needed to be added to known preparation processes, minimizing cost burden such as additional facilities for preparation at a lower cost.

### BRIEF DESCRIPTION OF THE FIGURES

**FIG. 1** shows a graph showing the difference in tensile strengths of a natural fiber polymer composite prior to and after application of isocyanate.
**FIG. 2** shows a graph showing surface morphologies of a natural fiber polymer composite prior to and after application of isocyanate, over humidity-resistance time.
**FIG. 3** shows a graph showing the changes in tensile strengths of a natural fiber polymer composite prior to and after application of isocyanate, over humidity-resistance time.
**FIG. 4** shows configuration of an eco-friendly lightweight substrate material for the automotive interior, according to an example of the present invention.

### DETAILED DESCRIPTION

Since the examples discussed below are intended to simply describe application effects of the present invention in detail, these are purely exemplary of the present invention and should not be considered to limit the invention in any way.

First, the following explanation of a natural fiber polymer composite is provided.

[materials]
1. isocyanate : 4,4'-methylenediphenyl diisocyanate (Pyusis Corp.)
2. natural fiber : kenaf (average diameter : 70µm, length : 60-80 mm)
3. thermoplastic polymer : polypropylene (Hankuk Fiber Corp. diameter :
   6D, length : 51 mm), polyester fiber (Woongjin Chemical Corp. diameter : 6D, length : 51 mm)

### EXAMPLES

### Example 1: Preparation of Natural Fiber/Polymer Composite

The preparation of natural fiber/polymer composite was carried out in the following processing order, in a ratio of a mixture as described in Table 1. Molding conditions were set to the hot-working pressing temperature of 200°C, the hot-working pressing time of 60 seconds, the cold-working pressing temperature of 23°C, and the cold-working pressing time of 60 seconds.

### Processing Order

i) Natural fiber and thermoplastic polymer fiber were processed via mixing, opening, carding, web-forming, needle-punching processes to prepare a natural fiber/polymer felt. ii) 1-30 phr of isocyanate was added on the felt, in a manner of spraying or applying on a roller, to mold the isocyanate in a semi-cured form using a hot-working pressing roller. iii) Thermoplastic polymer powder was applied thereon, curing of the isocyanate was then completed using the hot-working pressing roller, and a thermoplastic polymer powder layer was formed to prepare a natural fiber/polymer composite.

**Table 1**

| Sample | | | | |
|---|---|---|---|---|
| | Kenaf | PP | PET | MDI |
| 1 | 40 | 40 | 20 | 0 |
| 2 | | | | 5 |
| 3 | | | | 10 |

### Example 2: Measuring Tensile Strengths

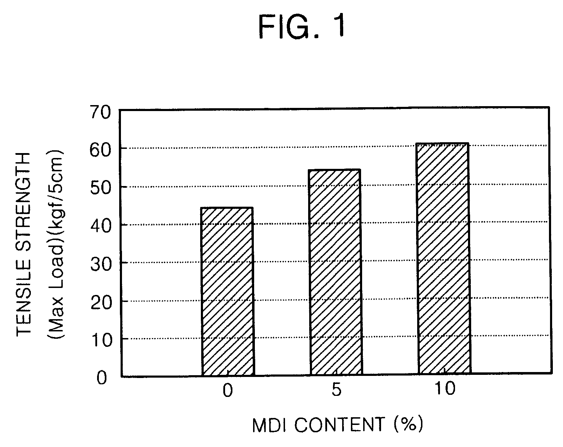

Figure 1 shows tensile strengths of natural fiber/polymer composites prepared in Example 1, according to contents of isocynate. As illustrated in Fig. 1, the tensile strength with 5% added isocynate is measured to be increased by about 23%, and the tensile strength with 10% added isocynate is measured to be increased by about 38%, in comparison with the tensile strength without addition of isocynate.

### Example 3: Assessment of Humidity-Resistance

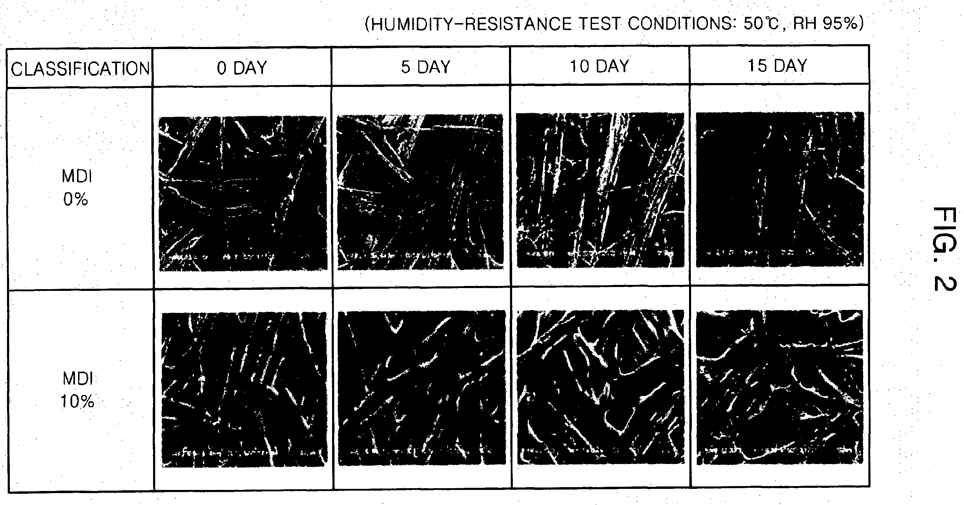

Provided is an assessment of humidity-resistances prior to and after application of an isocyanate layer, regarding the natural fiber polymer composite prepared in Example 1, by measuring the changes in the morphologies and tensile strengths thereof, over humidity-resistance time. Figure 2 shows the surface morphologies of the natural fiber polymer composite prior to and after addition of isocyanate, over the humidity-resistance time. As illustrated in Figure 2, it is understood that the surface damage occurred over the humidity-resistance time after the application, is remarkably lower than the damage prior to the application.

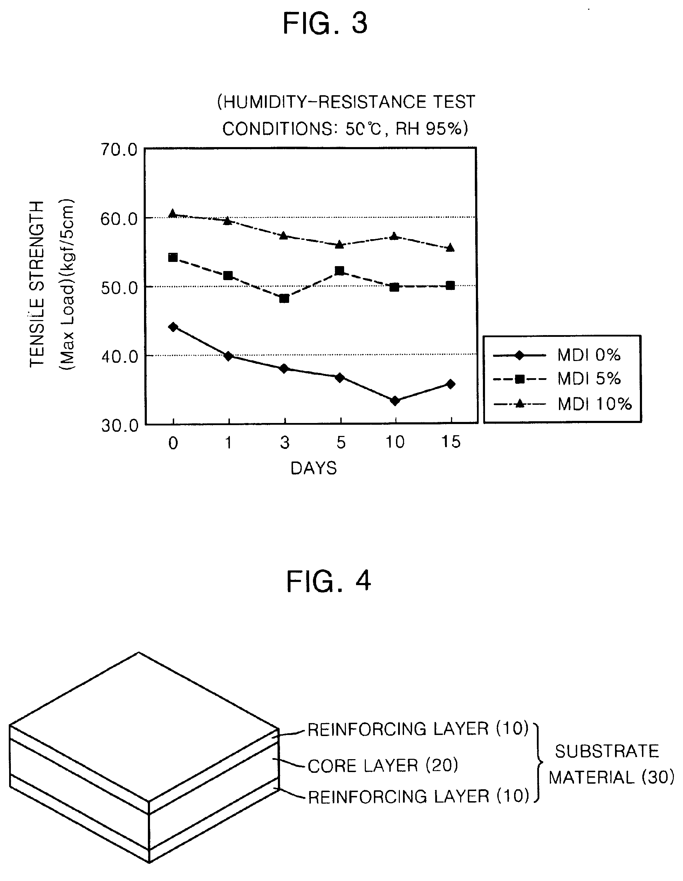

Figure 3 shows the changes in tensile strengths of a natural fiber polymer composite prior to and after application of an isocyanate layer, over humidity-resistance time. While the maximum tensile strength was decreased by about 25%, at 50°C and 95% relative humidity after 15 days prior to application of the isocyanate layer, the maximum tensile strength was decreased by about 8% with the addition of isocyanate.

In a comprehensive view of the above results, it is understood that addition of isocyanate is effective for enhancing the tensile strength and humidity-resistance of a natural fiber polymer composite.

The discussion below is offered to illustrate a method for preparing an eco-friendly lightweight substrate material for the automotive interior, using a natural fiber polymer composite as prepared above as a thin film reinforcing layer.

An eco-friendly lightweight substrate material for the automotive interior comprises a foam sheet of a core layer and a thin film reinforcing layer. It was pointed out that known substrate materials for the automotive interior with natural fiber applied, have problems such as deflection and distortion in high temperature and humidity conditions, due to the characteristics of natural fiber having poor water-resistance.

Accordingly, the present invention provides a thermal-laminating process in which humidity-resistance and flexural rigidity are enhanced by continuously stacking an isocyanate-applied natural fiber sheet as a thin film reinforcing layer on a foam sheet.

The preparation of an eco-friendly lightweight substrate material for the automotive interior, according to the present invention, was performed in the following processing order:

i) processing natural fiber and synthetic fiber in a weight ratio of 4 : 6 in mixing, carding, web-forming, and needle-punching processes to prepare a natural fiber felt;

ii) applying/impregnating isocyanate on the felt in a spraying process and then molding the isocyanate in a semi-cured form using a hot-working pressing roller;

iii) applying high-density polyethylene powder thereon, passing it through a hot-working oven to form a high-density polyethylene powder layer and complete curing reaction of the isocyanate, and then pressing it using a pressing roller to prepare a thin film reinforcing layer (10); and

iv) continuosly stacking the thin film reinforcing layer (10) on both sides of a polypropylene foam sheet that is a core layer(20) by thermal-laminating to prepare an eco-friendly lightweight substrate material for the automotive interior (30).

Table 2 shows the humidity-resistance flexural rigidity at room temperature and the humidity-resistance deflection extent of the specimens prepared according to the present invention, in comparison to conventional specimens. As compared in Table 2, with added isocynates each of 12g/m² and 24g/m², the states of flexural rigidity were increased respectively by 60% and 85%, the humidity-resistance flexural rigidities were increased respectively by about 90% and 110%, and the humidity-resistance deflection extents were decreased respectively by 50% and 80%, resulting in remarkable enhancement of humidity-resistance and mechanical characteristics.

In comparison with conventional heavyweight substrate materials, it is understood that the present invention is able to bring weight lightening of an eco-friendly lightweight substrate material into realization, since it shows excellent humidity-resistance with added isocynate of 12g/m², and shows remarkable enhancement in humidity-resistance and flexural rigidity with added isocynate of 24g/m², while the weight of the substrate material is lower than that of the conventional materials by 20%.

The measurement of the flexural rigidity was performed based on ASTM D790, in the conditions of the specimen size of "50 mm x 150 mm x thinkness", the testing rate of 5 mm/min, and the span width of 100 mm; and the test for the humidity-resistance flexural rigidity was carried out in the above conditions after allowing the specimen for 24 hours at 50°C, 95RH% humidity and then stabilizing it for an hour at 23°C, 95RH% humidity.

The measurement of the humidity-resistance deflection extent (L) was measured by fixating 70mm in the distal end of a specimen of 50 mm x 150 mm x thickness and 660 g/m² in weight; placing a weight of 40 mm x 60 mm in size and 34.2 g in weight on the opposite part; and measuring the difference between an initial height (L1) from the bottom to the lower part of the specimen and a subsequent height (L2) measured after allowing the specimen for 7 hours at 50°C and 95RH% humidity, such that the humidity-resistance deflection extent (L) is calculated by the change in the heights prior to and after applying humidity.

### humidity-resistance deflection extent (L)= initial height (L1) - subsequent height (L2)

**Table 2**

| Classification | Conventional 1 (heavyweight) | Conventional 2 (lightweight) | Example 1 | Example 2 | |
|---|---|---|---|---|---|
| Foam Sheet (PP FOAM) | 25times | 25times | 25 times | 25 times | |
| | | /4.5mm 200g/m² | /5.0mm 180 g/m² | /4.5mm 180g/m² | /4.5mm 180g/m² |
| Natural Fiber/ Synthetic Fiber(g/m²) | | 270 | 160 | 160 | 160 |
| HDPE Powder (g/m²) | | 50 | 80 | 68 | 56 |
| Isocyanate (g/m²) | | - | - | 12 | 24 |
| Total Weight (g/m²) | | 840 | 660 | 660 | 660 |
| Flexural Rigidity (kgf/5cm) | State | 2.2 | 1.3 | 2.1 | 2.4 |
| | Humidity-Resistance | 1.9 | 1.0 | 1.9 | 2.1 |
| Humidity-Resistance Deflection Extent (mm) | | 2.5 | 4.0 | 2.0 | 0.8 |

### CODE INDICATION

10 : a thin film reinforcing layer
20 : a core layer
30: an eco-friendly lightweight substrate material for the automotive interior

## Claims

1. A method for preparing a natural fiber polymer composite, **characterized in** the steps comprising:
preparing a felt consisting of a mixture of natural fiber and thermoplastic polymer fiber;
spraying or applying liquid isocyanate on the felt; and
curing the felt with the liquid isocyanate by hot-working pressing to mold a sheet-shaped form,
**characterized in that** the step of curing is **characterized in that** the isocyanate is processed by the hot-working pressing to mold the sheet-shaped form in a semi-cured state; and after applying thermoplastic polymer powder on the surface of the felt, curing of the isocyanate is completed by cold-working pressing.

2. The method of claim 1, **characterized in that** the natural fiber is cellulose-based fiber.

3. The method of claim 1, **characterized in that** the isocyanate is methylene diphenyl di-isocyanate (MDI) or toluene di-isocyanate (TDI).

4. A method for preparing a substrate material (30) for the automotive interior, **characterized in** the steps comprising:
a first step of preparing a felt using natural fiber and synthetic fiber;
a second step of applying isocyanate on the felt and then molding the isocyanate in a semi-cured state using a hot-working pressing roller to prepare a sheet;
a third step of forming a thermoplastic powder layer on the surface of the sheet and completing curing reaction of the isocyanate by applying thermoplastic powder on the sheet and heating to prepare a thin film reinforcing layer (10) using pressing; and
a forth step of continuously stacking the prepared thin film reinforcing layer (10) on one or both sides of a core layer (20) consisting of the foam sheet in a thermal-laminating process.

5. The method of claim 4, **characterized in that** the thermoplastic foam sheet is polypropylene, polyethylene, or polyester; the foaming magnification of the sheet is 5 to 40 times; and the thickness of the sheet is 2 to 10 mm.

6. The method of claim 4, **characterized in that** the isocyanate is methylene diphenyl X di-isocyanate (MDI) or toluene di-isocyanate (TDI).

7. The method of claim 4, **characterized in that** the weight of the isocyanate incorporated in thin film reinforcing layer (10) is 5 g/m² to 100 g/m².

8. The method of claim 4, **characterized in that** the thickness of thin film reinforcing layer (10) is 0.5 to 2 mm; and the weight of the layer is 120 g/m² to 700 g/m².

9. The method of claim 4, **characterized in that** one or more synthetic fibers for use in the thin film reinforcing layer (10) are selected from polypropylene fiber of 30-100 mm in length, core-sheath low melting point polyester fiber, polyester fiber, polyethylene fiber, acryl fiber, or biodegradable fiber.

10. The method of claim 4, **characterized in that** the content of natural fiber for use in the thin film reinforcing layer (10) is 30-70 % by weight.

11. The method of claim 4, **characterized in that** one or more natural fibers for use in the thin film reinforcing layer (10) are selected from kenaf of 30-100 mm in length, jute, linum, bamboo, or sisal.

12. The method of claim 4, **characterized in that** one or more for use in the thermoplastic powder are selected from low-density polyethylene, high-density polyethylene, or polypropylene.

13. An eco-friendly lightweight substrate material (30) for the automotive interior, **characterized in** being prepared by the method of claim 4.

14. The substrate material of claim 13, **characterized in that** a humidity-resistance flexural rigidity is greater than 1.0 kgf/5cm, and a humidity-resistance deflection extent (L) is equal to, or less than 2.0mm by the following standards,
wherein the humidity-resistance flexural rigidity (kgf/5cm) is the measured value, regarding a specimen of "50 mm x 150 mm x thickness" and "660 g/m²" in weight, calculated based on ASTM D790 after allowing the specimen for 24 hours at the testing rate of 5 mm/min, the span width of 100 mm, 50°C, and 95RH% humidity, and then stabilizing the specimen for an hour at 23°C and 95RH% humidity; and
wherein the humidity-resistance deflection extent (L) is measured by fixating 70mm in the distal end of a specimen of "50 mm x 150 mm x thickness" and "660 g/m²" in weight; placing a weight of 40 mm x 60 mm in size and 34.2 g in weight on the opposite part; and measuring the difference between an initial height (L1) from the bottom to the lower part of the specimen and a subsequent height (L2) measured after allowing the specimen for 7 hours at 50°C and 95RH% humidity (i.e. L = L1 - L2).

## Patentansprüche

1. Herstellungsverfahren für einen Naturfaserpolymerverbundstoff, **gekennzeichnet durch** die Schritte, die umfassen:
Herstellen eines Filzes, der aus einer Mischung aus Naturfaser und thermoplastischer Polymerfaser besteht;
Sprühen oder Aufbringen von flüssigem Isocyanat auf den Filz; und
Aushärten des Filzes mit dem flüssigen Isocyanat **durch** Heißpressen, um eine plattenähnliche Form zu bilden,
**dadurch gekennzeichnet,** dass der Schritt zum Aushärten **dadurch gekennzeichnet** ist, dass das Isocyanat **durch** das Heißpressen verarbeitet wird, um die plattenähnliche Form in einem halb-ausgehärteten Zustand zu formen; und dass nach dem Aufbringen von thermoplastischen Polymerpulver auf die Oberfläche des Filzes das Aushärten des Isocyanats **durch** Kaltpressen abgeschlossen wird.

2. Verfahren nach Anspruch 1, **dadurch gekennzeichnet, dass** die Naturfaser eine zellulosebasierte Faser ist.

3. Verfahren nach Anspruch 1, **dadurch gekennzeichnet, dass** das Isocyanat Methylendiphenyldiisocyanat (MDI) oder Toluoldiisocyanat (TDI) ist.

4. Herstellungsverfahren für ein Substratmaterial (30) für den Kraftfahrzeuginnenraum, **dadurch gekennzeichnet, dass** es folgende Schritte umfasst:
einen ersten Schritt zum Herstellen eines Filzes unter Verwendung von Naturfaser und synthetischer Faser;
einen zweiten Schritt zum Aufbringen von Isocyanat auf den Filz und zum anschließenden Formen des Isocyanats in einem halb-ausgehärteten Zustand unter Verwendung einer Heisspresswalze, um eine Platte herzustellen;
einen dritten Schritt zum Bilden einer thermoplastischen Pulverschicht auf der Oberfläche der Platte und Ausführen einer Aushärtungsreaktion des Isocyanats durch Aufbringen von thermoplastischem Pulver auf die Platte und Erhitzen, um eine Verstärkungs-Dünnschicht (10) unter Verwendung von Pressen herzustellen; und
einen vierten Schritt zum gleichmäßigen Schichten der hergestellten Verstärkungs-Dünnschicht (10) auf eine oder beide Seiten einer Kernschicht (20), die aus der Schaumplatte besteht, in einem thermischen Laminierungsverfahren.

5. Verfahren nach Anspruch 4, **dadurch gekennzeichnet, dass** die thermoplastische Schaumplatte Polypropylen, Polyethylen oder Polyester ist; die Schäumungsvergrößerung der Platte 5 bis 40 Mal beträgt; und die Dicke der Platte 2 bis 10 mm beträgt.

6. Verfahren nach Anspruch 4, **dadurch gekennzeichnet, dass** das Isocyanat Methylendiphenyldiisocyanat (MDI) oder Toluoldiisocyanat (TDI) ist.

7. Verfahren nach Anspruch 4, **dadurch gekennzeichnet, dass** das Gewicht des in der Verstärkungs-Dünnschicht (10) verarbeiteten Isocyanats 5 g/m² bis 100 g/m² beträgt.

8. Verfahren nach Anspruch 4, **dadurch gekennzeichnet, dass** die Dicke der Verstärkungs-Dünnschicht (10) 0,5 bis 2 mm beträgt; und das Gewicht der Schicht 120 g/m² bis 700 g/m² beträgt.

9. Verfahren nach Anspruch 4, **dadurch gekennzeichnet, dass** eine oder mehrere synthetische Fasern zur Verwendung in der Verstärkungs-Dünnschicht (10) aus Polypropylenfasern mit 30 bis 100 mm Länge, Kern-Mantel-Polyesterfasern mit niedrigem Schmelzpunkt, Polyesterfasern, Polyethylenfasern, Acrylfasern oder biologisch abbaubaren Fasern gewählt werden.

10. Verfahren nach Anspruch 4, **dadurch gekennzeichnet, dass** der Gehalt an Naturfasern zur Verwendung in der Verstärkungs-Dünnschicht (10) 30-70 Gew.-% beträgt.

11. Verfahren nach Anspruch 4, **dadurch gekennzeichnet, dass** eine oder mehrere Naturfasern zur Verwendung in der Verstärkungs-Dünnschicht (10) aus Kenaf mit 30 bis 100 mm Länge, Jute, Leinen, Bambus oder Sisal gewählt werden.

12. Verfahren nach Anspruch 4, **dadurch gekennzeichnet, dass** zur Verwendung in dem thermoplastischen Pulver eines oder mehrere von Polyethylen mit niedriger Dichte, Polyethylen mit hoher Dichte oder Polypropylen gewählt werden.

13. Umweltfreundliches leichtes Substratmaterial (30) für den Kraftfahrzeuginnenraum, **dadurch gekennzeichnet, dass** es nach dem Verfahren nach Anspruch 4 hergestellt wird.

14. Substratmaterial nach Anspruch 13 **dadurch gekennzeichnet, dass** eine Feuchtigkeitsbeständigkeits-Biegesteifigkeit größer als 1,0 kgf/5 cm ist und ein Feuchtigkeitsbeständigkeits-Auslenkungsausmaß (L) gleich oder kleiner als 2,0 mm nach folgenden Standards ist,
wobei die Feuchtigkeitsbeständigkeits-Biegesteifigkeit (kgf/ 5 cm) der gemessene Wert ist, hinsichtlich einer Probe von "50 mm x 150 mm x Dicke" und "600 g/m²" an Gewicht, berechnet basierend auf ASTM D790, nachdem die Probe 24 Stunden bei einer Testgeschwindigkeit von 5 mm/min, der Spannweite von 100 mm, 50 °C und 95 RH% Feuchtigkeit belassen wurde, und die Probe anschließend für eine Stunde bei 23 °C und 95 RH% Feuchtigkeit stabilisiert wurde; und
wobei das Feuchtigkeitsbeständigkeits-Auslenkungsausmaß (L) gemessen wird durch Fixieren von 70 mm an dem distalen Ende einer Probe von "50 mm x 150 mm x Dicke" und "660 g/m²" an Gewicht; Platzieren eines Gewichtes von 40 mm x 60 mm Größe und 34,2 g Gewicht an dem gegenüberliegenden Teil; und Messen der Differenz zwischen einer Anfangshöhe (L1) vom Boden zum unteren Teil der Probe und einer anschließenden Höhe (L2), gemessen nachdem die Probe für 7 Stunden bei 50 °C und 95 RH% Feuchtigkeit belassen wurde (d.h. L = L1 - L2).

## Revendications

1. Procédé de préparation d'un composite de polymère de fibres naturelles, **caractérisé par** les étapes comprenant :
la préparation d'un feutre constitué d'un mélange d'une fibre naturelle et d'une fibre polymère thermoplastique ;
la pulvérisation ou l'application d'un isocyanate liquide sur le feutre ; et
le durcissement du feutre avec l'isocyanate liquide par pressage à chaud pour mouler une forme de feuille,
**caractérisé en ce que** l'étape de durcissement est **caractérisé en ce que** l'isocyanate est traité par le pressage à chaud pour mouler la forme de feuille dans un état semi-durci ; et après application d'une poudre polymère thermoplastique sur la surface du feutre, le durcissement de l'isocyanate est achevé par un pressage à froid.

2. Procédé selon la revendication 1, **caractérisé en ce que** la fibre naturelle est une fibre à base de cellulose.

3. Procédé selon la revendication 1, **caractérisé en ce que** l'isocyanate est un diisocyanate de méthylène-diphényle (MDI) ou un diisocyanate de toluène (TDI).

4. Procédé de préparation d'un matériau de substrat (30) pour l'habitacle d'une automobile, **caractérisé par** les étapes comprenant :
une première étape de préparation d'un feutre utilisant une fibre naturelle et une fibre synthétique ;
une deuxième étape d'application d'isocyanate sur le feutre, puis de moulage de l'isocyanate dans un état semi-durci en utilisant un rouleau de pressage à chaud pour préparer une feuille ;
une troisième étape de formation d'une couche de poudre thermoplastique sur la surface de la feuille et d'achèvement de la réaction de durcissement de l'isocyanate en appliquant une poudre thermoplastique sur la feuille et de chauffage pour préparer une couche de renfort à film mince (10) en utilisant une pression ; et
une quatrième étape d'empilement continu de la couche de renfort à film mince préparée (10) sur une ou les deux faces d'une couche d'âme (20) constituée de la couche de mousse dans un processus de stratification thermique.

5. Procédé selon la revendication 4, **caractérisé en ce que** la feuille de mousse thermoplastique est constituée de polypropylène, polyéthylène ou polyester ; l'expansion de moussage de la feuille est de 5 à 40 fois ; et l'épaisseur de la feuille est de 2 à 10 mm.

6. Procédé selon la revendication 4, **caractérisé en ce que** l'isocyanate est un diisocyanate de méthylène-diphényle (MDI) ou un diisocyanate de toluène (TDI).

7. Procédé selon la revendication 4, **caractérisé en ce que** le poids de l'isocyanate incorporé dans la couche de renfort à film mince (10) est de 5 g/m² à 100 g/m².

8. Procédé selon la revendication 4, **caractérisé en ce que** l'épaisseur de la couche de renfort à film mince (10) est de 0,5 à 2 mm ; et le poids de la couche est de 120 g/m² à 700 g/m².

9. Procédé selon la revendication 4, **caractérisé en ce qu'**une ou plusieurs fibres synthétiques destinées à être utilisées dans la couche de renfort à film mince (10) sont choisies à partir d'une fibre de polypropylène d'une longueur de 30 à 100 mm, une fibre de polyester à faible point de fusion à âme et enveloppe, une fibre de polyester, des fibres de polyéthylène, une fibre acrylique ou une fibre biodégradable.

10. Procédé selon la revendication 4, **caractérisé en ce que** la teneur en fibre naturelle destinée à être utilisée dans la couche de renfort à film mince (10) est de 30 à 70 % en poids.

11. Procédé selon la revendication 4, **caractérisé en ce qu'**une ou plusieurs fibres naturelles destinées à être utilisées dans la couche de renfort à film mince (10) sont choisies parmi du kenaf d'une longueur de 30 à 100 mm, du jute, du lin, du bambou ou du sisal.

12. Procédé selon la revendication 4, **caractérisé en ce qu'**une ou plusieurs fibres synthétiques destinées à être utilisées dans la poudre thermoplastique sont choisies parmi du polyéthylène de faible densité, du polyéthylène de haute densité ou du polypropylène.

13. Matériau de substrat écologique léger (30) pour l'habitacle d'une automobile, **caractérisé en ce qu'**il est préparé au moyen du procédé selon la revendication 4.

14. Matériau de substrat selon la revendication 13, **caractérisé en ce que** la rigidité à la flexion de résistance à l'humidité est supérieure à 1,0 kgf/5 cm et l'extension de déviation de résistance à l'humidité (L) est inférieure ou égale à 2,0 mm, conformément aux normes suivantes,
dans lequel la rigidité en flexion de résistance à l'humidité (kgf/5 cm) est la valeur mesurée, concernant une éprouvette « d'une épaisseur de 50 mm x 150 mm » et d'un poids de « 660 g/m² », calculée en se basant sur la D790 ASTM après avoir laissé pendant 24 h l'éprouvette à la vitesse d'essai de 5 mm/min, la portée de 100 mm, 50 °C et une humidité de 95 %RH, puis stabilisation de l'éprouvette pendant une heure à 23 °C et une humidité de 95 %RH ; et
dans lequel l'extension de déviation de résistance à l'humidité (L) est mesurée par fixation à 70 mm à l'extrémité distale d'une éprouvette « d'une épaisseur de 50 mm x 150 mm » et d'un poids de « 660 g/m² », en plaçant un poids ayant des dimensions de 40 mm x 60 mm et un poids de 34,2 g sur la partie opposée ; et en mesurant la différence entre la longueur initiale (L1) de la partie inférieure à la partie supérieure de l'éprouvette et une hauteur ultérieure (L2) mesurée après avoir laissé l'éprouvette pendant 7 h à 50 °C et une humidité de 95 %RH (c'est-à-dire, L = L1 - L2).
